# EUROPÄISCHE PATENTSCHRIFT

(11) **EP 1 018 233 B1**
(45) Veröffentlichungstag und Bekanntmachung des Hinweises auf die Patenterteilung: **13.11.2002**
(21) Anmeldenummer: 98952570.4
(22) Anmeldetag: 16.09.1998
(51) Int. Cl.: H04L 1/00, H04L 1/12, H04Q 7/30

(54) **VERFAHREN UND BASISSTATIONSSYSTEM ZUR SPRACHÜBERTRAGUNG ÜBER EINE FUNKSCHNITTSTELLE IN EINEM DIGITALEN FUNK-KOMMUNIKATIONSSYSTEM**
METHOD AND BASE STATION SYSTEM FOR VOICE TRANSMISSION VIA A RADIO INTERFACE IN A DIGITAL RADIOTELEPHONE COMMUNICATION SYSTEM
PROCEDE ET SYSTEME DE STATION DE BASE POUR TRANSMISSION DE CONVERSATION VIA UNE INTERFACE RADIO DANS UN SYSTEME NUMERIQUE DE RADIOTELECOMMUNICATIONS

(30) Priorität: 24.09.1997 DE 19742124
(43) Veröffentlichungstag der Anmeldung: 12.07.2000
(73) Patentinhaber: SIEMENS AKTIENGESELLSCHAFT, 80333 München (DE)
(72) Erfinder: OESTREICH, Stefan, D-83607 Holzkirchen (DE); FÄRBER, Michael, D-82515 Wolfratshausen (DE); KOTTKAMP, Meik, D-81369 München (DE)
(86) Internationale Anmeldenummer: DE9802744
(87) Internationale Veröffentlichungsnummer: WO99016204

(56) Entgegenhaltungen:
- WO-A-97/33402
- WO-A-97/41641
- US-A- 5 095 500

## Beschreibung

Die Erfindung betrifft ein Verfahren und ein Basisstationssystem zur Sprachübertragung über eine Funkschnittstelle in einem digitalen Funk-Kommunikationssystem, insbesondere in einem digitalen Mobilfunksystem oder in einem drahtlosen Teilnehmerzugangssytems (Access-Network-System).

Ein Basisstationssystem ist ein Teil eines digitalen Funk-Kommunikationssystem, das beispielsweise dem GSM-Mobilfunknetz (Global System for Mobile Communications), wie es unter anderem aus J. Biala, "Mobilfunk und intelligente Netze", Vieweg Verlag, 1995, insbesondere den Seiten 57 bis 92, bekannt ist, entsprechen kann. Insbesondere kann das Funk-Kommunikationssystem aber auch einem Mobilfunksystem der dritten Generation (UMTS - Universal Mobile Telecommunication System), das im allgemeinen den gleichen Systemaufbau wie das GSM-Mobilfunknetz aufweisen wird, oder einem Access-Network-System, wie es aus M. Reiß "Drahtlos zum Freizeichen", telcom report 18, 1995, Seite 34 bis 37, bekannt ist, entsprechen.

Derartige Funk-Kommunikationssysteme ermöglichen den Aufbau von Kommunikationsverbindungen zur Übertragung von Informationen, insbesondere Sprachinformationen, über eine Funkschnittstelle zwischen Basisstationen und Funksstationen von Teilnehmern. Die Funkstationen können dabei beispielsweise in einem Mobilfunksystem als Mobilstationen oder in einem Access-Network-System als drahtlose Netzanschlußeinheiten ausgebildet sein.

Zur Teilnehmerseparierung werden unterschiedliche Verfahren verwendet. Als Basis dieser Verfahren kommt im allgemeinen ein Frequenzmultiplexverfahren FDMA (Frequency Division Multiple Access) mit einer Auftrennung einer gegebenen Frequenzbandbreite in mehrere Frequenzkanäle zum Einsatz. Sind mehrere Teilnehmer auf einer gleichen Trägerfrequenz der Funkschnittstelle durch unterschiedliche Zeitlagen getrennt, liegt zusätzlich ein Zeit-Multiplexverfahren TDMA (Time Division Multiple Access) vor, wie es beispielsweise auch in dem GSM-Mobilfunksystem Anwendung findet. Sind die Teilnehmer auf der gleichen Trägerfrequenz durch unterschiedliche Codes getrennt, liegt ein Code-Multiplexverfahren (CDMA - Code Division Multiple Access) vor, wie es unter anderem aus T. Ketseglou, T. Zimmermann "Effizienter Teilnehmerzugriff für 3. Generation der Mobilkommunikation", telcom report 16, 1993, Seiten 38 bis 41, bekannt ist und sowohl in den Mobilfunksystemen der zweiten und dritten Generation als auch in Access-Network-Systemen zur Anwendung kommt bzw. kommen soll. Auch ist aus DE 195 49 158 ein Hybrid dieser beiden Verfahren zur Teilnehmerseparierung bekannt, das neben einer CDMA-Teilnehmerseparierung zusätzlich eine Zeitmultiplex-Teilnehmerseparierung aufweist (TD/CDMA).

Ein Funk-Kommunikationssystem umfaßt zumindest ein Basisstationssystem, das beispielsweise eine Basisstations-Steuerung enthält, die mit einer Mehrzahl von Basisstationen verbunden ist. Die Basisstationen versorgen jeweils einen Funkbereich, auch Funkzelle genannt, mit funktechnische Ressourcen. Jede Basisstation kann dabei nur über einen begrenzten Vorrat von funktechnischen Ressourcen verfügen um Interferenzen zu vermeiden. Die Funkbereiche benachbarter Basisstationen überlappen sich an den Grenzflächen der Funkzellen oder aufgrund eines hierarchischen Aufbaus der Funkzellen, wie er für die Mobilfunksysteme der zweiten und dritten Generation geplant ist. Bei Mobilfunksystemen ist durch die Verbindung mehrerer Basisstation mit einer Basisstations-Steuerung eine Übergabeprozedur (Handover) zwischen zwei Basisstationen möglich, um dem mobilen Teilnehmer eine uneingeschränkte Bewegungsfreiheit mit seiner Mobilstation zu ermöglichen.

Die Basisstations-Steuerung übernimmt dabei die Funktion der Vermittlung und des Managements der Funkkanäle der Basisstation und die Verwaltung und Ausführung von Übergabeprozeduren.

In digitalen Funk-Kommunikationssystemen werden zur Kodierung von Sprachinformationen digitale Sprachcodecs eingesetzt. Diese Sprachcodecs bestehen beispielsweise bei einem GSM-Mobilfunksystem aus einem Sprachkodierer und einem nachgeschalteten Kanalkodierer. In dem Sprachkodierer wird die 64 kbit/s Datenrate von PCM30-Kanälen auf beispielsweise eine Datenrate von 13 kbit/s reduziert, die als Nettobitrate bezeichnet wird, da sie nur die reinen kodierten Sprachinformationen enthält. In dem Kanalkodierer wird daraufhin durch ein Fehlerkorrekturverfahren zusätzliche Redundanz zu dem Sprachsignal hinzugefügt, so daß sich die Bitrate beispielsweise auf 22,8 kbit/s erhöht, der Bruttobitrate. Dieses Beispiel bezieht sich auf einen Vollraten-Codec. Als Weiterentwicklung wurden auch Halbraten-Codecs in dem GSM-Mobilfunksystem eingesetzt, die nur die halbe Datenrate zur Sprachübertragung verwenden. Eine derartige Komprimierung der Sprachsignale ist notwendig, da die zur Verfügung stehenden funktechnischen Ressourcen begrenzt sind und eine möglichst große Anzahl Teilnehmer mit dem Mobilfunksystem versorgt werden soll.

Der Anteil des Fehlerschutzes an der Bruttodatenrate (=Nettodatenrate der Nutzdaten + Fehlerschutz) bei den verwendeten Sprachcodecs ist im allgemeinen hoch und bei guten Übertragungskanalbedingungen überdimensioniert. Aus diesem Grund wird der Einsatz von adaptiven Multi-Raten-Sprachcodecs (AMR - Adaptive Multi Rate) vorgeschlagen, wobei der Anteil des Fehlerschutzes abhängig von den Übertragungsbedingungen auf der Funkschnittstelle variiert wird. Durch die Reduzierung des. Fehlerschutzes kann die Bitrate nach der Sprachkodierung erhöht und damit die Sprachqualität verbessert werden, oder die Bruttodatenrate reduziert und somit Kapazitäten für weitere Teilnehmer geschaffen werden.

Als Parameter für die Bestimmung des Fehlerschutzes kann beispielsweise die von der empfangenden Funkstation ermittelte Bitfehlerrate verwendet werden. Dieser Parameter birgt allerdings den Nachteil, das sich die Bitfehlerrate durch kurzzeitige Störungen, wie beispielsweise Abschattungen, und besonders durch die Bewegung der Teilnehmer von Mobilfunksystemen sehr schnell ändern kann, so daß der Sprachcodec nicht in der Lage ist, dieser schnellen Änderung zu folgen. Weiterhin ist eine Schätzung der zukünftigen Übertragungsbedingungen aus in der Vergangenheit gemessenen Werten kaum möglich.

Aus der WO 97/33402 A1 ist ein Verfahren bekannt, bei dem ein Signal über eine Funkschnittstelle zwischen einer Funkstation und Basisstationen übertragen wird. Aus dem Signal wird ein für die Übertragungsverhältnisse der Funkschnittstelle charakteristischer Wert ermittelt und für eine senderseitige Sprach- und Kanalkodierung berücksichtigt. Für die Steuerung der Sprach- und Kanalkodierung werden dabei entweder ein aktuell bestimmter charakteristischer Wert oder vorbestimmte feste Werte verwendet.

Der Erfindung liegt die Aufgabe zugrunde, ein Verfahren und ein Basisstationssystem anzugeben, die eine verbesserte Sprach- und Kanalkodierung ermöglichen, unabhängig von kurzzeitigen Schwankungen der Übertragungskanaleigenschaften.

Diese Aufgabe wird durch das Verfahren und durch das Basisstationssystem mit den Merkmalen der unabhängigen Patentansprüche gelöst. Weiterbildungen der Erfindung sind den Unteransprüchen zu entnehmen.

Beim erfindungsgemäßen Verfahren zur Sprachübertragung über eine Funkschnittstelle in einem digitalen Funk-Kommunikationssystem, das zumindest eine Basisstation, die mit einer Basisstations-Steuerung verbunden ist, sowie zumindest eine erste Funkstation, die sich in dem Funkversorgungsbereich der Basisstation befindet, aufweist, wird zumindest ein Signal über die Funkschnittstelle zwischen der ersten Funkstation und der Basisstation übertragen. Aus diesem Signal wird zumindest ein charakteristischer Wert bezüglich von Übertragungsverhältnissen der Funkschnittstelle bestimmt. Der charakteristische Wert wird in zumindest einer Speichereinrichtung gespeichert und zu einem späteren Zeitpunkt zusätzlich zu einem aktuell bestimmten charakteristischen Wert für eine Steuerung einer senderseitigen Sprach- und Kanalkodierung durch zumindest einen Sprach- und Kanalcodec berücksichtigt.

Dieser charakteristischer Wert kann in einer ersten Ausgestaltung der Erfindung auf einen Empfangspegel, eine Bitfehlerrate und/oder ein der Signallaufzeit zwischen der ersten Funkstation und der Basisstation proportionaler Wert und/oder ein Signal-Rausch-Verhältnis bezogen sein. Besonders leicht aus Funk-Kommunikationssystemen zu entnehmende charakteristische Werte sind der Empfangspegel und die Bitfehlerrate (die als skalierte Werte RXLEV, RXQUAL angegeben werden), da sie in der Regel in den derzeitigen Realisierungen bereits vorliegen.

In zwei alternativen Ausgestaltungen der Erfindung wird der Sprach- und der Kanalcodec derart angesteuert, daß in der ersten Ausgestaltung die Bitrate des Fehlerschutzes in dem Kanalcodec und somit auch die Bruttobitrate am Ausgang des Kanalcodecs variiert wird, wobei die Nettobitrate am Ausgang des Sprachcodecs konstant gehalten wird, und daß in der zweiten Ausgestaltung die Nettobitrate am Ausgang des Sprachcodecs und die Bitrate des Fehlerschutzes in dem Kanalcodec variiert wird, wobei die Bruttobitrate am Ausgang des Kanalcodecs konstant gehalten wird.

Die erste dieser beiden Ausgestaltungen besitzt den Vorteil, daß durch einen geringeren Fehlerschutz die Bruttobitrate gesenkt und somit zusätzliche Kapazität für weitere Sprachübertragungen auf der Funkschnittstelle geschaffen wird. Die zweite Ausgestaltung besitzt hingegen den Vorteil, daß die Sprachkodierung bei einem geringeren Fehlerschutz großzügiger gestaltet werden kann, und somit die Sprachqualität erhöht wird.

Aus dem gespeicherten und dem aktuell bestimmten charakteristischen-Wert wird gemäß einer weiteren Ausgestaltung ein statistischer Mittelwert oder die Differenz ermittelt, der oder die jeweils für die Steuerung des Sprach- und Kanalcodecs berücksichtigt wird.

Vorteilhaft wird weiterhin der Funkversorgungsbereich der Basisstation in geographische Teilbereiche aufgeteilt und der Aufenthaltsort bzw. Standort der Funkstation ermittelt und einem geographischen Teilbereich zugeordnet. Der Aufenthaltsort bzw. Standort kann dabei durch ein globales Lokalisierungssystem, wie beispielsweise dem GPS (Global Positioning System), durch gerichtete Antennen, Entfernungsmessungen und/oder bei der Netzplanung des Funk-Kommunikationssystems ermittelt werden.

Durch diese Zuordnung der Funkstationen zu geographischen Teilbereichen kann in einer weiteren Ausgestaltung der Erfindung der bestimmte charakteristische Wert mit einen Gewichtungskoeffizienten gewichtet werden. Dieser Gewichtungskoeffizient wird bei der Netzplanung für die einzelnen geographischen Teilbereiche festgelegt und kann abhängig von geographischen Gegebenheiten und/oder von der Zeit variieren. Die zeitliche Variation kann beispielsweise aufgrund eines tageszeitbedingten erhöhten Verkehrsaufkommens, d.h. vermehrten Übertragungsstörungen, oder durch eine höhere Teilnehmerdichte sinnvoll sein. Der Gewichtungskoeffizient bewirkt somit vorteilhaft, daß in bestimmten Teilbereichen und/oder zu bestimmten Zeiten beispielsweise ein höherer Fehlerschutz verwendet wird, um eine gleichmäßig hohe Übertragungsqualtität sicherzustellen.

Ein Zusammenfassen von mehreren geographischen Teilbereichen, die gleiche oder ähnliche geographische Gegebenheiten aufweisen, zu einem Teilbereich und dem Festlegen eines einheitlichen Gewichtungskoeffizienten ist beispielsweise in ländlichen Gebieten sinnvoll, wodurch die Ermittlung und Speicherung der charakteristischen Werte und die Steuerung vereinfacht werden kann.

In einer weiteren vorteilhaften Ausgestaltung ist in der Speichereinrichtung eine dreidimensionale Speichermatrix verwirklicht, in der der charakteristische Wert nach den geographischen Teilbereich, in dem sich die erste Funkstation befindet, und nach der Zeit eingetragen wird. Gemeinsam mit den jeweils für den geographischen Teilbereich gespeicherten Gewichtungskoeffizienten stehen somit alle für eine optimale Steuerung des Sprach- und Kanalcodecs benötigten Daten zur Verfügung.

Der charakteristische Wert kann durch einen Timer gesteuert periodisch in vorgegebenen zeitlichen Intervallen ermittelt und gespeichert werden. Für den Fall, daß die erste Funkstation als eine mobile Funkstation ausgestaltet ist, kann eine Speicherung des charakteristischen Wertes zusätzlich auch bei einem Wechsel in einen anderen geographischen Teilbereich des Funkversorgungsbereichs der Basisstation erfolgen. Nach den gleichen Kriterien kann ebenfalls die Steuerung der Sprach- und Kanalkodierung angeregt werden.

Durch diese Ausgestaltungen ist es vorteilhaft möglich, Erfahrungswerte, d.h. periodisch gespeicherte charakteristische Werte, abhängig von Ort und Zeit und gegebenenfalls jeweils durch Gewichtungskoeffizienten gewichtet, für die Steuerung des Sprach- und Kanalcodecs zu berücksichtigen. Hierdurch werden vorteilhaft kurze Störungen der Übertragungsqualität relativiert und die Sprachkodierung kann beispielsweise mit einem optimal angepaßten Fehlerschutz durchgeführt werden.

In zwei weiteren Ausgestaltungen der Erfindung werden für die Steuerung der senderseitigen Sprach- und Kanalkodierung nicht nur die gespeicherten und aktuell bestimmten charakteristischen Werte für die Sprachübertragung zwischen der Basisstation und der ersten Funkstation berücksichtigt, sondern zusätzlich auch gespeicherte und aktuell bestimmte charakteristische Werte bezüglich der Übertragungsverhältnisse zwischen der Basisstation und weiteren Funkstationen. Diese weiteren Funkstationen befinden sich dabei ebenfalls in dem Funkversorgungsbereich der Basisstation oder in dem gleichen geographischen Teilbereich wie die erste Funkstation.

Hierdurch wird vorteilhaft eine Datenbank verwirklicht, in der charakteristische Werte aller in dem Funkversorgungsbereich der Basisstation befindlichen Funkstationen nach Ort und Zeit gespeichert werden. Für eine mobile Funkstation, die beispielsweise in ein neues geographisches Teilgebiet eintritt, kann dabei auf die charakteristischen Werte anderer Funkstationen, die sich in dem Teilgebiet befinden bzw. befanden, für die Steuerung des Sprach- und Kanalcodecs zurückgegriffen werden, um somit eine möglichst optimale Sprach- und Kanalkodierung zu realisieren. Die Steuerung der Sprach- und Kanalkodierung wird durch diese Maßnahmen sehr unempfindlich gegenüber kurzen Störungen in der Übertragungsqualität. Störungen von längerer Dauer werden dagegen durch eine regelmäßige Bestimmung der charakteristischen Werte und beispielsweise dessen statistischen Mittelwert berücksichtigt.

Die nachfolgende Beschreibung mehrerer Ausführungsbeispiele des erfindungsgemäßen Verfahrens und des erfindungsgemäßen Basisstationssystems besitzt lediglich beispielhaften Charakter. Die beschriebenen Merkmale sind nicht zwingend in der dargestellten Art zur Verwirklichung des angestrebten Erfolges erforderlich.

Ausführungsbeispiele der Erfindung werden anhand der beiliegenden Zeichnungen näher erläutert.

Dabei zeigen
- FIG 1: ein Funk-Kommunikationssystem in allgemeiner Darstellung (Stand der Technik),
- FIG 2: ein Blockschaltbild von Komponenten der erfindungsgemäßen Basisstationssystems,
- FIG 3: ein Blockschaltbild entsprechend der FIG 2, mit einer Aufteilung des Funkversorgungsbereiches der Basisstation in geographische Teilbereiche,
- FIG 4: eine beispielhaft angegebene dreidimensionale Speichermatrix, und
- FIG 5: ein Ablaufdiagramm des erfindungsgemäßen Verfahrens.

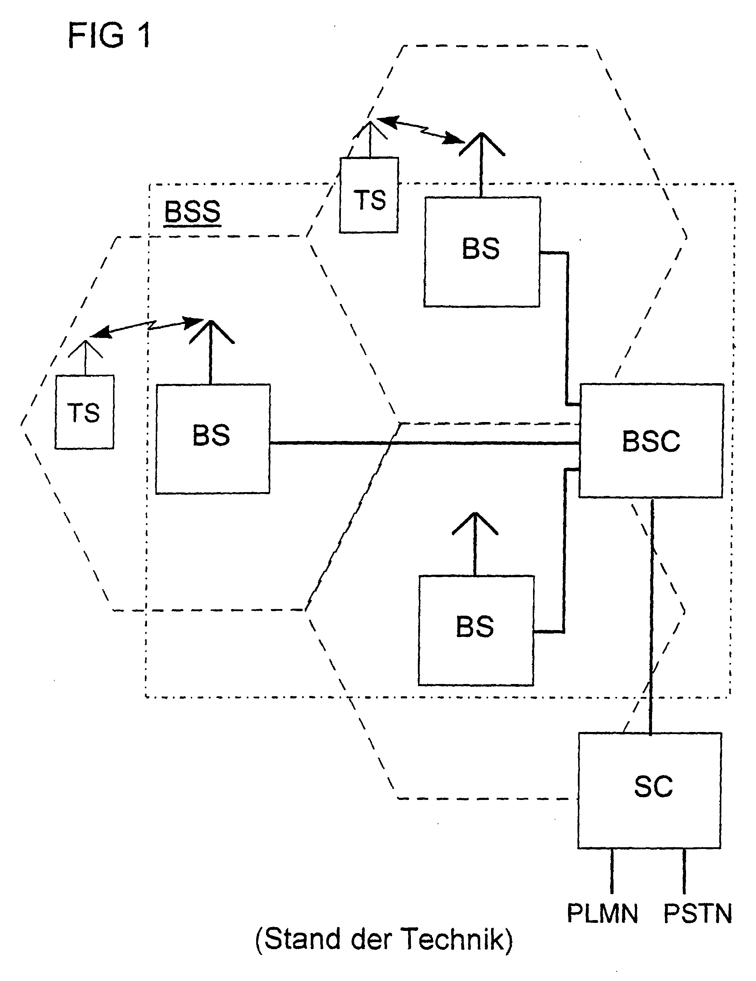

Das in FIG 1 dargestellte Funk-Kommunikationssystem entspricht einem Teil eines bekannten GSM-Mobilfunksystems, ist jedoch auch auf ein Mobilfunksystem der dritten Generation oder ein drahloses Teilnehmerzugangssystem (Access-Network-System) übertragbar. Ein derartiges Funk-Kommunikationssystem besteht aus einer oder einer Vielzahl von Vermittlungsstellen SC, die untereinander vernetzt sind bzw. den Zugang zu einem Festnetz PSTN oder einem Mobilfunknetz PLMN herstellen. Weiterhin sind diese Vermittlungsstellen SC mit jeweils zumindest einer Basisstations-Steuerung BSC verbunden. Jede Basisstations-Steuerung BSC ermöglicht wiederum eine Verbindung zu zumindest einer Basisstation BS, die über eine Funkschnittstelle Kommunikationsverbindungen zu einer oder mehreren Funkstationen TS von Teilnehmern aufbauen und auslösen kann.

Jede Basisstation BS versorgt jeweils einen geographischen Bereich mit funktechnischen Ressourcen. Nach der FIG 1 versorgen die Basisstationen BS beispielsweise jeweils einen vereinfacht als Sechseck dargestellten Bereich, der allgemein als Funkzelle bezeichnet wird. An den Grenzen der jeweiligen Zellen sind Überlappungen vorgesehen, so daß beispielsweise eine im Überlappungsbereich befindliche Funkstation TS zu zumindest zwei Basisstationen BS eine Verbindung aufbauen kann. Gemeinsam mit der Basisstations-Steuerung BSC bilden die Basisstationen BS ein Basisstationssystem BSS.

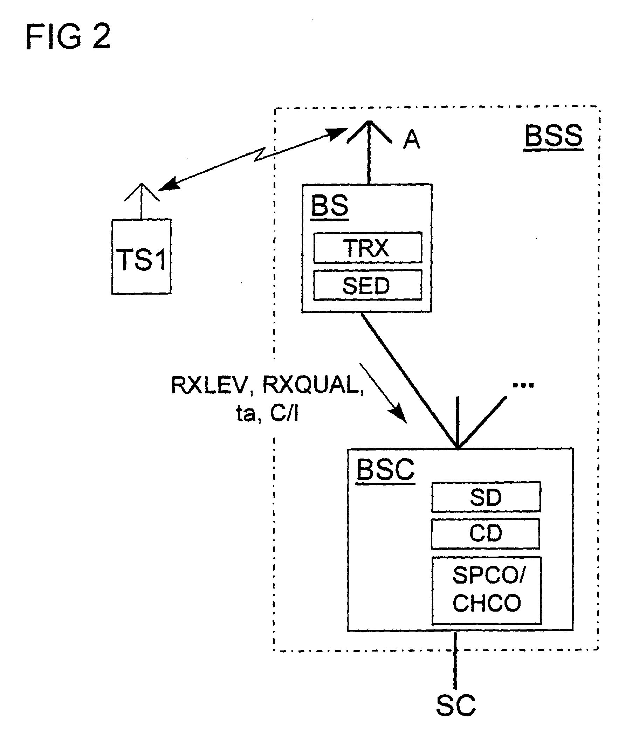

Komponenten dieses Basisstationssystems BSS sind in der FIG 2 beispielhaft dargestellt. Die Basisstations-Steuerung BSC kann als separate Einheit oder zusammen mit einer Basisstation BS oder anderen Komponenten des Funk-Kommunikationssystems verwirklicht sein.

Die Basisstation BS empfängt über eine Antenne A und eine Sende/Empfangseinrichtung TRX Nutz- und Signalisierungsinformationen sowie Meßwerte über die Übertragungsbedingungen der Luftschnittstelle zu der ersten Funkstation TS1 und signalisiert diese der Basisstations-Steuerung BSC. Solche Meßgrößen, die sich gegebenenfalls erst nach internen Umrechnungen in einer Signalauswerteeinrichtung SED in der Basisstation BS ergeben, sind beispielsweise der Empfangspegel RXLEV, eine skalierte Größe zur Bitfehlerrate RXQUAL, eine Vorhaltezeit ta oder ein Signal-Rausch-Verhältnis C/I. Diese Werte können auch von der ersten Funkstation TS1 ermittelt und über die Luftschnittstelle zu der Basisstation BS übertragen werden.

In einer Speichereinrichtung SD der Basisstations-Steuerung BSC werden die bestimmten charakteristischen Werte gespeichert, wobei diese Speichereinrichtung SD gleichsam in der Basisstation BS verwirklicht sein kann. Die charakteristischen Werte RXLEV, RXQUAL werden in einem GSM-Mobilfunksystem beispielsweise von der Funkstation TS1 signalisiert, währenddessen die Angabe zu Signallaufzeit in Form der Vorhaltezeit ta und die Angaben zum Signal-Rausch-Verhältnis C/I in der Basisstation BS selbst aus den Empfangssignalen gewonnen werden. Es ist jedoch ebenso möglich, nur in der ersten Funkstation TS1 oder in der Basisstation BS ermittelte Werte oder alternative Kombinationen in der Speichereinrichtung SD zu speichern.

Die Basisstations-Steuerung BSC enthält neben weiteren Komponenten eine Steuereinrichtung CD, die nach Auswerten der gespeicherten und der aktuell bestimmten charakteristischen Werte einen Sprach- SPCO und Kanalcodec CHCO ansteuert, in dem die Sprach- und Kanalkodierung der Sprachsignale für die Übertragung über die Funkschnittstelle erfolgt. In einem GSM-Mobilfunksystem kann dieser Sprach- SPCO und Kanalcodec CHCO auch zwischen der Basisstations-Steuerung BSC und der als Mobilvermittlungsstelle MSC ausgestalteten Vermittlungsstelle SC in einer (nicht dargestellten) Transkodiereinheit TRAU verwirklicht sein. Diese Transkodiereinheit TRAU kann wiederum in der Mobilvermittlungsstelle MSC oder in der Basisstations-Steuerung BSC integriert sein.

Die netzseitig von der Mobilvermittlungsstelle MSC eintreffenden Sprachinformationen einer Kommunikationsverbindung, beispielsweise mit 64 kbit/s über eine PCM-Verbindung, werden mit Hilfe des Sprachcodecs SPCO durch eine Faltungskodierung des Sourcekodes sprachkodiert und besitzen anschließend eine Nettobitrate von beispielsweise 13 kbit/s. In der anschließenden Kanalkodierung in dem Kanalcodec CHCO wird die Bitrate durch Hinzufügen von Schutzbits beispielsweise auf eine Bruttobitrate von 22,8 kbit/s erhöht und die so kodierten Sprachinformationen zu der Basisstations-Steuerung BSC übertragen. Ein vergleichbarer Sprach- SPCO und Kanalcodec CHCO ist ebenfalls in der ersten Funkstation TS1 verwirklicht. Aufgrund der Steuerung der Sprach- und Kanalkodierung kann alternativ die Bitrate des Fehlerschutzes in dem Kanalcodec und somit Bruttobitrate am Ausgang des Kanalcodecs variiert werden, wobei die Nettobitrate am Ausgang des Sprachcodecs konstant gehalten wird, oder die Nettobitrate am Ausgang des Sprachcodecs und somit die Bitrate des Fehlerschutzes in dem Kanalcodec variiert werden, wobei die Bruttobitrate am Ausgang des Kanalcodecs konstant gehalten wird. Hierdurch kann einerseits die benötigte Übertragungskapazität verringert werden, andererseits die Sprachqualität durch eine verbesserte Sprachkodierung bei einer konstanten Übertragungskapazität erhöht werden.

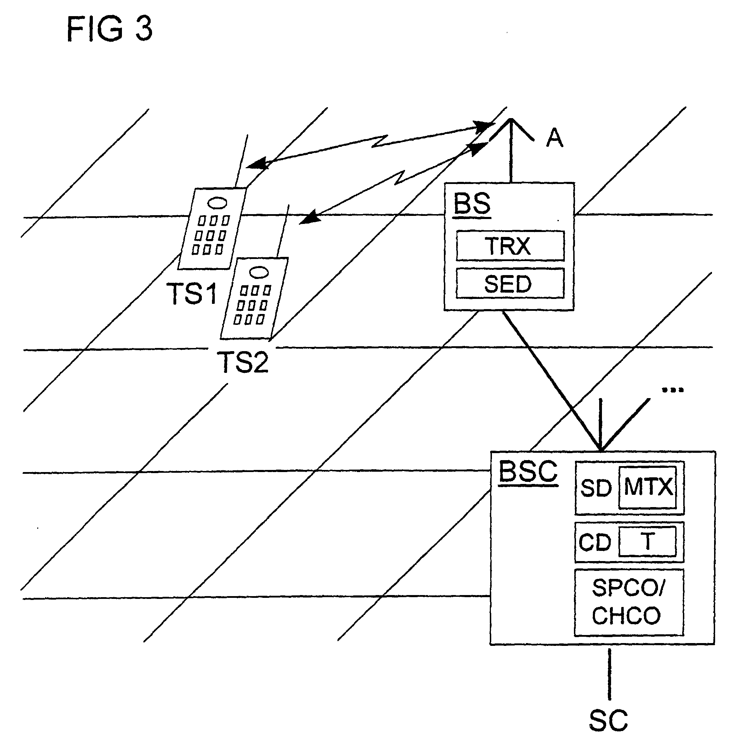

Die FIG 3 zeigt ein der FIG 2 entsprechendes Basisstationssystem für ein Mobilfunkssystem, mit einer Basisstations-Steuerung BSC, die mit einer Vermittlungsstelle SC verbunden ist, und einer Basisstation BS. In dem Funkversorgungsbereich der Basisstation BS befinden sich eine als Mobilstationen ausgestaltete erste TS1 und zweite Funkstation TS2. Der Funkversorgungsbereich der Basisstation BS ist in einzelne geographische Teilbereiche aufgeteilt.

Die Aufenthaltsorte der beiden Funkstationen TS1, TS2 werden beispielsweise durch ein GPS-System (Global Positioning System) ermittelt und jeweils einem geographischen Teilbereich zugeordnet. Dieses kann in der Weise erfolgen, daß in den Funkstationen TS1 und TS2 jeweils die Positionsangabe berechnet und der Basisstation BS signalisiert wird. Die Signalauswerteeinrichtung SED in der Basisstation BS ermittelt daraufhin die jeweilige Zuordnung zu einem geographischen Teilbereich.

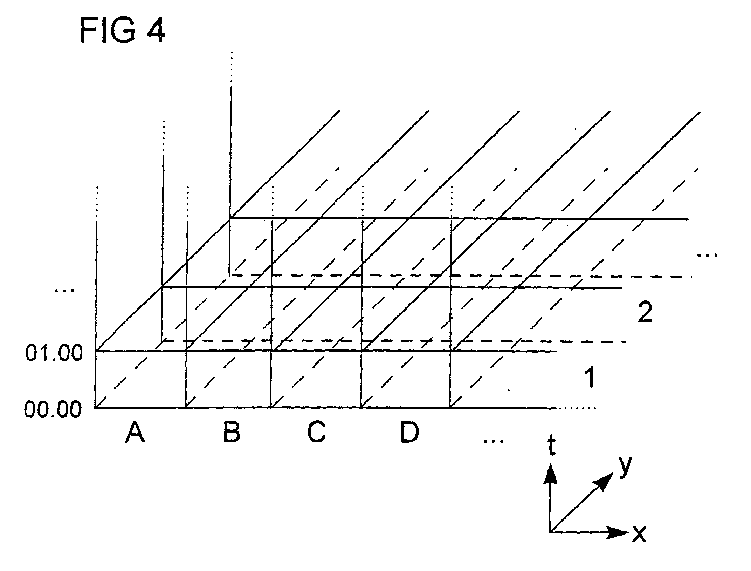

Für die Nutzung dieser spezifischen Ortsangabe der Funkstationen TS1, TS2 ist in der Speichereinrichtung SD in der Basisstations-Steuerung BSC eine dreidimensionale Speichermatrix MTX, wie sie beispielhaft als ein Ausschnitt in der FIG 4 dargestellt ist, verwirklicht. Diese Speichermatrix MTX entspricht in der Grundebene, gekennzeichnet durch die Achsen x und y, der Aufteilung in die geographischen Teilbereiche des Funkversorgungsbereiches der Basisstation BS, die beispielhaft in der x-Richtung mit der Buchstabenfolge A, B,... und in der y-Richtung mit der Ziffernfolge 1, 2,... zur Adressierung der einzelnen Teilbereiche gekennzeichnet sind. Eine entsprechende Adressierung kann ebenfalls durch binäre Zahlen erfolgen. Die dritte Dimension der Speichermatrix MTX entspricht einer Zeitachse t, die beispielsweise in Stunden-, Minuten- oder Sekundenschritten unterteilt sein kann.

Die charakteristischen Werte werden in diese Speichermatrix MTX nach dem geographischen Teilbereich, in dem sich die jeweilige Funkstation TS1 bzw. TS2 befindet, und nach der Zeit eingetragen. Weiterhin kann in der Speichermatrix MTX für jeden geographischen Teilbereich jeweils ein Gewichtungskoeffizient gespeichert werden. Dieser Gewichtungskoeffizient wird beispielsweise bei der Netzplanung festgelegt, und hängt vorwiegend von den geographischen Gegebenheiten in den Teilbereichen ab. Eine mögliche Darstellung dieses Gewichtungskoeffizienten ist ein Multiplikationsfaktor zwischen 0 und 1, mit dem die charakteristischen Werte gewichtet werden. Ein Gewichtungskoeffizient mit dem Wert 1 kann beispielsweise für ein ländliches Gebiet definiert werden, in dem es nur sehr geringe Abschattungen und nur eine unterdurchschnittlich hohe Verkehrsdichte gibt. In Ballungszentren dagegen kann der Gewichtungskoeffizient beispielsweise bei 0,5 liegen, d.h., es treten häufig Störungen der Übertragung durch Abschattungen auf und es besteht eine hohe Verkehrsdichte.

Weiterhin kann der Gewichtungskoeffizient zeitlich variieren, da beispielsweise in Stoßzeiten mit einer sehr hohen Verkehrslast eine zusätzliche Beeinträchtigung der Übertragungsqualität auftritt. Durch diese Gewichtung der charakteristischen Werte wird die Steuerung der Sprach- und Kanalkodierung beeinflußt, so daß bei einem niedrigen Gewichtungskoeffizienten generell ein höherer Fehlerschutz durchgeführt wird als bei einem hohem Gewichtungskoeffizienten, unabhängig von den tatsächlichen Gegebenheiten, die durch die chrakteristischen Werte dargestellt werden.

Die sukzessive Ermittlung der charakteristischen Werte kann beispielsweise durch einen in der Steuereinrichtung CD verwirklichten Timer T gesteuert werden, der in Übereinstimmung mit den Zeitschritten in der Speichermatrix MTX die Ermittlung und den Eintrag der charakteristischen Werte anregt. Durch diesen Timer T kann gleichsam die Steuerung des Sprach-SPCO und Kanalcodecs CHCO gesteuert werden. Zusätzlich kann die Ermittlung des charakteristischen Wertes und der Steuerung des Sprach- SPCO und Kanalcodecs CHCO bei einem Übertritt der Mobilstation in einen anderen geographischen Teilbereich erfolgen.

In dem dargestellten Beispiel der FIG 3 ist der Sprach- SPCO und Kanalcodec CHCO derart ausgestaltet, daß die Nettobitrate nach der Sprachkodierung und/oder die Bruttobitrate nach der Kanalkodierung variieren kann. Die Steuerung des Sprach- SPCO und des Kanalcodecs CHCO erfolgt durch die Steuereinrichtung CD, die die gespeicherten charakteristischen Werte in der Speichermatrix MTX auswertet. In dem Beispiel befinden sich die erste TS1 und die zweite Funkstation TS2 in dem gleichen geographischen Teilbereich. Um die Sprach- und Kanalkodierung für die Sprachübertragung zu der ersten Funkstation TS1 zu steuern, wertet die Steuereinrichtung CD die aktuell ermittelten und die in der Speichermatrix MTX gespeicherten charakteristischen Werte der ersten TS1 und der zweiten Funkstation TS2 aus.

Für die Auswertung können dann jeweils die charakteristischen Werte, die in mehreren Zeitschritten von den gleichen Mobilstationen oder die beispielsweise am vorangegangenen Tag für andere Mobilstationen gespeichert wurden, berücksichtigt werden. Der Zeitraum bzw. die Menge der berücksichtigten charakteristischen Werte kann von der Steuereinrichtung CD definiert werden, wobei jeweils eine Berechnung des statistischen Mittelwertes oder der Differenz erfolgen kann.

Für den Fall, daß die erste Funkstation TS1 in einen anderen geographischen Teilbereich übertritt, in dem sich bereits die zweite Funkstation TS2 befindet, kann die Steuereinrichtung CD für die Steuerung des Sprach- SPCO und Kanalcodecs CHCO auf die bereits ermittelten charakteristischen Werte bezüglich der zweiten Funkstation TS2 zurückgreifen und somit sofort eine optimale Sprach- und Datenkodierung für die Sprachübertragung zu der ersten Funkstation TS1 generieren.

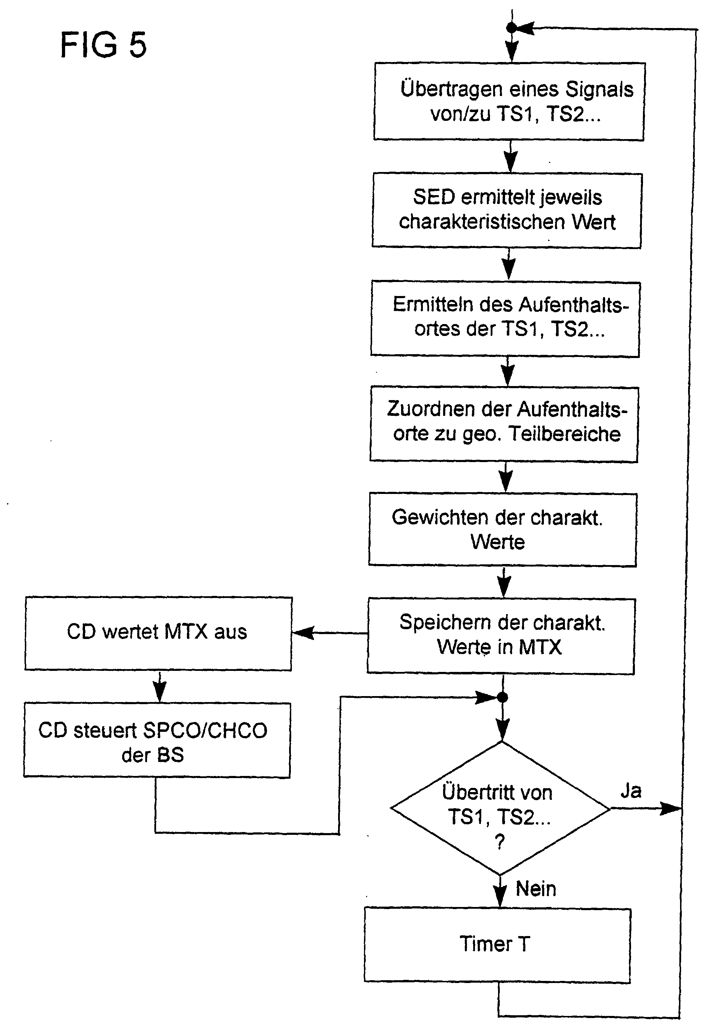

In der FIG 5 wird ein Ablaufdiagramm des erfindungsgemäßen Verfahrens dargestellt. Die einzelnen Schritte entsprechen den beschriebenen Punkten bei der Beschreibung der FIG 3 und FIG 4.

In einem ersten Schritt wird ein Signal zwischen den Funkstationen TS1, TS2 von Teilnehmern, die sich in dem Funkversorgungsbereich der Basisstation BS befinden, und der Basisstation BS übertragen. In einer Signalauswerteeinrichtung SED wird daraufhin jeweils zumindest ein charakteristischer Wert bestimmt, der eine Aussage bezüglich der Übertragungsverhältnisse der Funkschnittstelle ermöglicht. Die Bestimmung der charakterischten Werte kann dabei in der Basisstation BS und/oder jeweils in den Funkstationen TS1, TS2... erfolgen. In einem dritten Schritt wird der jeweilige Aufenthaltsort der Funkstationen TS1, TS2... ermittelt. Dieses kann beispielsweise über ein beschriebenes GPS-System erfolgen. Auf der Grundlage der ermittelten Aufenthaltsorte wird eine Zuordnung zu geographischen Teilbereichen des Funkversorgungsbereichs der Basisstation BS durchgeführt. Vor einer Speicherung der ermittelten chrakteristischen Werte kann eine Gewichtung mit einem für den jeweiligen geographischen Teilbereich definierten Gewichtungskoeffizienten erfolgen, der unabhängig von den tatsächlich vorhandenen Übertragungsbedingungen eine direkte Beeinflussung der Kodierung ermöglicht, um eine konstant hohe Übertragungs- und Empfangsqualität sicherzustellen.

Die in der Speichermatrix MTX gespeicherten charakteristischen Werte werden daraufhin von der Steuereinrichtung CD in der Basisstations-Steuerung BSC ausgewertet und beispielsweise gemeinsam mit aktuell ermittelten charakteristischen Werten für die Steuerung des Sprachcodecs SPCO zur Sprachkodierung und des Kanalcodecs CHCO zur Kanalkodierung verwendet. Die Ermittlung und Steuerung der Kodierung wird durch einen Timer T gesteuert, so daß in festen zeitlichen Abständen eine mögliche Veränderung der Übertragungseigenschaften ermittelt und entsprechend eine Steuerung der Kodierung durchgeführt wird. Weiterhin kann aufgrund einer festgestellten Veränderung des Aufenthaltsortes, beispielsweise des Übertritts der ersten Funkstation TS1 von einem geographischen Teilbereich der Funkzelle in einen anderen geographischen Teilbereich eine Erfassung der charakteristischen Werte und eine daraus folgende notwendige Steuerung der Kodierung initiiert werden. Bei einem Übertritt der ersten Funkstation TS1 in eine benachbarte Funkzelle können die für den ursprünglichen geographischen Teilbereich gespeicherten charakteristischen Werte in der Speichermatrix MTX verbleiben und für weitere Funkstationen TS2..., die sich in dem gleichen geographischen Teilgebiet aufhalten oder in dieses eintreten, verwendet werden, um durch diese Erfahrungswerte eine schnellere Anpassung der Kodierung an die Übertragungsverhältnisse vorzunehmen.

Das Verfahren kann in der dargestellten Abfolge oder aber auch in einer anderen Reihenfolge durchgeführt werden. So kann beispielsweise die Gewichtung der charakteristischen Werte durch den jeweiligen Gewichtungskoeffizienten auch von der Steuereinrichtung CD nach dem Auswerten der Speichermatrix MTX, und die Ermittlung des Aufenthaltsortes der Funkstationen TS1 und TS2 parallel zu der Ermittlung des jeweiligen charakteristischen Wertes erfolgen.

## Patentansprüche

1. Verfahren zur Sprachübertragung über eine Funkschnittstelle in einem digitalen Funk-Kommunikationssystem, das
- zumindest eine Basisstation (BS), die mit einer Basisstations-Steuerung (BSC) verbunden ist, und
- zumindest eine erste Funkstation (TS1), die sich in einem Funkversorgungsbereich der Basisstation (BS) befindet,
aufweist, bei dem
- zumindest ein Signal über die Funkschnittstelle zwischen der ersten Funkstation (TS1) und der Basisstation (BS) übertragen wird, und
- aus dem Signal zumindest ein charakteristischer Wert (RXLEV, RXQUAL, ta, C/I) bezüglich von Übertragungsverhältnisse der Funkschnittstelle bestimmt wird,
**dadurch gekennzeichnet, daß**
- der charakteristische Wert (RXLEV, RXQUAL, ta, C/I) in zumindest einer Speichereinrichtung (SD) gespeichert wird, und
- der gespeicherte charakteristische Wert (RXLEV, RXQUAL, ta, C/I) zu einem späteren Zeitpunkt zusätzlich zu einem aktuell bestimmten charakteristischen Wert (RXLEV, RXQUAL, ta, C/I) für eine Steuerung einer senderseitigen Sprach- und Kanalkodierung durch zumindest einen Sprach- (SPCO) und Kanalcodec (CHCO) für die Sprachübertragung berücksichtigt wird.

2. Verfahren nach Anspruch 1, bei dem
als charakteristischer Wert (RXLEV, RXQUAL, ta, C/I) ein Empfangspegel, eine Bitfehlerrate und/oder ein der Signallaufzeit (ta) zwischen der ersten Funkstation (TS1) und der Basisstation (BS) proportionaler Wert und/oder ein Signal-Rausch-Verhältnis bestimmt wird.

3. Verfahren nach einem der vorhergehenden Ansprüche, bei dem ein statistischer Mittelwert des gespeicherten und des aktuell bestimmten charakteristischen Wertes (RXLEV, RXQUAL, ta, C/I) oder die Differenz zwischen dem gespeicherten und dem aktuell bestimmten charakteristischen Wert (RXLEV, RXQUAL, ta, C/I) ermittelt und für die Steuerung der senderseitigen Sprach- und Kanalkodierung berücksichtigt wird.

4. Verfahren nach einem der vorhergehenden Ansprüche, bei dem der Funkversorgungsbereich der Basisstation (BS) in geographische Teilbereiche aufgeteilt wird, und der Aufenthaltsort der ersten Funkstation (TS1) durch ein globales Lokalisierungssystem, gerichtete Antennen, Entfernungsmessungen und/oder bei der Netzplanung ermittelt und einem geographischen Teilbereich des Funkversorgungsbereichs der Basisstation (BS) zugeordnet wird.

5. Verfahren nach einem der vorhergehenden Ansprüche, bei dem der bestimmte charakteristische Wert (RXLEV, RXQUAL, ta, C/I) durch zumindest einen Gewichtungskoeffizienten gewichtet wird, wobei der Gewichtungskoeffizient abhängig von geographischen Gegebenheiten für die einzelnen geographischen Teilbereiche bei der Netzplanung festgelegt und/oder abhängig von der Zeit variiert wird.

6. Verfahren nach dem vorhergehenden Anspruch, bei dem mehrere geographische Teilbereiche, die gleiche oder ähnliche geographische Gegebenheiten aufweisen, zu einem geographischen Teilbereich mit einem gemeinsamen Gewichtungskoeffizienten zusammengefaßt werden.

7. Verfahren nach einem der vorhergehenden Ansprüche, bei dem der charakteristische Wert (RXLEV, RXQUAL, ta, C/I) periodisch in vorgegebenen zeitlichen Intervallen und/oder bei einem Übertritt der ersten Funkstation (TS1) in einen anderen geographischen Teilbereich bestimmt wird.

8. Verfahren nach einem der vorhergehenden Ansprüche, bei dem
- weitere charakteristische Werte (RXLEV, RXQUAL, ta, C/I) bezüglich der Übertragungsverhältnisse zwischen der Basisstation (BS) und weiteren Funkstationen (TS2...), die sich ebenfalls in dem Funkversorgungsbereich der Basisstation (BS) oder in dem gleichen geographischen Teilbereich wie die erste Funkstation (TS1) befinden, in der Speichereinrichtung (SD) gespeichert werden, und
- die gespeicherten weiteren charakteristischen Werte (RXLEV, RXQUAL, ta, C/I) zu einem späteren Zeitpunkt mit aktuell bestimmten weiteren charakteristischen Werten (RXLEV, RXQUAL, ta, C/I) zusätzlich für die Steuerung der senderseitigen Sprach- und Kanalkodierung für die Sprachübertragung zwischen der Basisstation (BS) und der ersten Funkstation (TS1) berücksichtigt werden.

9. Verfahren nach einem der vorhergehenden Ansprüche, bei dem der charakteristische Wert (RXLEV, RXQUAL, ta, C/I) in einer in der Speichereinrichtung (SD) verwirklichten dreidimensionalen Speichermatrix (MTX) nach dem geographischen Teilbereich und nach der Zeit gespeichert wird.

10. Basisstationssystem (BSS) für ein digitales Funk-Kommunikationssystem, mit zumindest einer Basisstation (BS), die mit einer Basisstations-Steuerung (BSC) verbunden ist, mit
- zumindest einer Sende/Empfangseinrichtung (TRX) zum Senden und Empfangen von Sprachinformationen über eine Funkschnittstelle zwischen der Basisstation (BS) und einer in dem Funkversorgungsbereich der Basisstation (BS) befindlichen ersten Funkstation (TS1),
- einer Signalauswerteeinrichtung (SED) zum Bestimmen von zumindest einem charakteristischen Wert (RXLEV, RXQUAL, ta, C/I) bezüglich von Übertragungsverhältnissen der Funkschnittstelle aus einem über die Funkschnittstelle übertragenen Signal,
- einer Speichereinrichtung (SD) zum Speichern des charakteristischen Wertes (RXLEV, RXQUAL, ta, C/I), und
- einer Steuereinrichtung (CD) zum Steuern einer senderseitigen Sprach- und Kanalkodierung durch zumindest einen Sprach- (SPCO) und Kanalcodec (CHCO) für die Sprachübertragung über die Funkschnittstelle, wobei die Steuereinrichtung (CD) den gespeicherten charakteristischen Wert (RXLEV, RXQUAL, ta, C/I) zu einem späteren Zeitpunkt zusätzlich zu einem aktuell bestimmten charakteristischen Wert (RXLEV, RXQUAL, ta, C/I) für die Steuerung der Sprach- und Kanalkodierung berücksichtigt.

11. Basisstationssystem (BSS) nach Anspruch 10, bei dem die erste Funkstation (TS1) den charakteristischen Wert (RXLEV, RXQUAL, ta, C/I) bezüglich der Übertragungsverhältnisse der Luftschnittstelle bestimmt und der Basisstation (BS) signalisiert.

12. Basisstationssystem (BSS) nach Anspruch 10 oder 11, mit der Steuereinrichtung (CD), zur Steuerung des Sprach- (SPCO) und Kanalcodec (CHCO) zur Sprach- und Kanalkodierung derart daß die Bitrate des Fehlerschutzes in dem Kanalcodec (CHCO) und somit die Bruttobitrate am Ausgang des Kanalcodecs (CHCO) variiert, wobei die Nettobitrate am Ausgang des Sprachcodecs (SPCO) konstant bleibt, oder daß die Nettobitrate am Ausgang des Sprachcodecs (SPCO) und die Bitrate des Fehlerschutzes in dem Kanalcodec (CHCO) variiert, wobei die Bruttobitrate am Ausgang des Kanalcodecs (CHCO) konstant bleibt.

13. Basisstationssystem (BSS) nach einem der Ansprüche 10 bis 12, bei dem
die Speichereinrichtung (SD) und die Steuereinrichtung (CD) jeweils in der Basisstation (BS) oder in der Basisstations-Steuerung (BSC) verwirklicht sind.

14. Basisstationssystem (BSS) nach einem der Ansprüche 10 bis 13, mit
der Steuereinrichtung (CD), zum Ermitteln eines statistischen Mittelwerte oder einer Differenz zwischen dem gespeicherten und dem aktuell bestimmten charakteristischen Wert (RXLEV, RXQUAL, ta, C/I).

15. Basisstationssystem (BSS) nach einem der Ansprüche 10 bis 14, bei dem
der Funkversorgungsbereich der Basisstation (BS) in geographische Teilbereiche aufgeteilt ist, und der Aufenthaltsort der ersten Funkstation (TS1) durch ein globales Lokalisierungssystem, gerichtete Antennen, Entfernungsmessungen oder eine Netzplanung ermittelt wird.

16. Basisstationssystem (BSS) nach dem vorhergehenden Anspruch, bei dem
die Steuereinrichtung (CD) den bestimmten charakteristischen Wert (RXLEV, RXQUAL, ta, C/I) durch einen für jeden geographischen Teilbereich festgelegten Gewichtungskoeffizienten gewichtet, der abhängig von geographischen Gegebenheiten und/oder von der Zeit variiert.

17. Basisstationssystem (BSS) nach Anspruch 15 oder 16, mit einer in der Speichereinrichtung (SD) verwirklichten dreidimensionalen Speichermatrix (MTX), in der die bestimmten charakteristischen Werte (RXLEV, RXQUAL, ta, C/I) bezüglich der Übertragungsverhältnisse zwischen der Basisstation (BS) und der ersten Funkstation (TS1) sowie weiteren Funkstationen (TS2...), die sich ebenfalls in dem Funkversorgungsbereich der Basisstation (BS) oder in dem gleichen geographischen Teilbereich wie die erste Funkstation (TS1) befinden, jeweils nach dem geographischen Teilbereich und nach der Zeit gespeichert sind.

18. Basisstationssystem (BSS) nach dem vorhergehenden Anspruch, bei dem
in der dreidimensionalen Speichermatrix (MTX) zusätzlich der den geographischen Teilbereichen jeweils zugeordnete Gewichtungskoeffizient gespeichert ist.

19. Basisstationssystem (BSS) nach einem der Ansprüche 10 bis 18, mit
einem in der Steuereinrichtung (ST) verwirklichten Timer (T), zum periodischen Anregen der Ermittlung des charakteristischen Wertes (RXLEV, RXQUAL, ta, C/I) in vorgegebenen zeitlichen Intervallen.

## Claims

1. Method for voice transmission via a radio interface in a digital radio communication system which has
- at least one base station (BS) which is connected to a base station controller (BSC), and
- at least one first radio station (TS1) which is located in a radio supply area of the base station (BS),
in which
- at least one signal is transmitted via the radio interface between the first radio station (TS1) and the base station (BS),
- at least one characteristic value (RXLEV, RXQUAL, ta, C/I) relating to the transmission response of the radio interface is determined from the signal,
**characterized in that**
- the characteristic value (RXLEV, RXQUAL, ta, C/I) is stored in at least one storage device (SD), and
- the stored characteristic value (RXLEV, RXQUAL, ta, C/I) is taken into account at a later point in time, in addition to a currently determined characteristic value (RXLEV, RXQUAL, ta, C/I) for controlling a transmitter-end voice and channel coding by means of at least one voice (SPCO) and channel codec (CHCO) for voice transmission.

2. Method according to Claim 1, in which
a reception level, a bit error rate and/or a value which is proportional to the signal propagation time (TA) between the first radio station (TS1) and the base station (BS), and/or a signal-to-noise ratio are/is determined as the characteristic value (RXLEV, RXQUAL, ta, C/I).

3. Method according to one of the preceding claims, in which a statistical mean value of the stored and currently determined characteristic value (RXLEV, RXQUAL, ta, C/I) or the difference between the stored and the currently determined characteristic value (RXLEV, RXQUAL, ta, C/I) is determined and is taken into account for controlling the transmitter-end voice and channel coding.

4. Method according to one of the preceding claims, in which the radio supply area of the base station (BS) is split into geographical subareas, and the location of the first radio station (TS1) is determined by means of a global localization system, directional antennas, range measurements and/or during network planning, and is assigned to a geographical subarea of the radio supply area of the base station (BS).

5. Method according to one of the preceding claims, in which the determined characteristic value (RXLEV, RXQUAL, ta, C/I) is weighted by at least one weighting coefficient, in which case the weighting coefficient is defined as a function of geographical characteristics for the individual geographical subareas during network planning, and/or is varied as a function of time.

6. Method according to the preceding claim, in which a plurality of geographical subareas which have the same or similar geographical characteristics are combined to form a geographical subarea having a common weighting coefficient.

7. Method according to one of the preceding claims, in which the characteristic value (RXLEV, RXQUAL, ta, C/I) is determined periodically at predetermined time intervals and/or if the first radio station (TS1) moves to another geographical subarea.

8. Method according to one of the preceding claims, in which
- further characteristic values (RXLEV, RXQUAL, ta, C/I) relating to the transmission response between the base station (BS) and further radio stations (TS2...) which are likewise located in the radio supply area of the base station (BS) or in the same geographical subarea as the first radio station (TS1), are stored in the storage device (SD), and
- the stored further characteristic values (RXLEV, RXQUAL, ta, C/I) are additionally taken into account at a later point in time together with currently determined further characteristic values (RXLEV, RXQUAL, ta, C/I) for controlling the transmitter-end voice and channel coding for voice transmission between the base station (BS) and the first radio station (TS1).

9. Method according to one of the preceding claims, in which the characteristic value (RXLEV, RXQUAL, ta, C/I) is stored in a three-dimensional memory matrix (MTX), provided in a storage device (SD), on the basis of the geographical subarea and on the basis of time.

10. Base station system (BSS) for a digital radio communication system, having at least one base station (BS) which is connected to a base station controller (BSC), having
- at least one transmitting/receiving device (TRX) for transmitting and receiving voice information via a radio interface between the base station (BS) and the first radio station (TS1) which is located in the radio supply area of the base station (BS),
- a signal evaluation device (SED) for determining at least one characteristic value (RXLEV, RXQUAL, ta, C/I) relating to the transmission response of the radio interface, from a signal which is transmitted via the radio interface,
- a storage device (SD) for storing the characteristic value (RXLEV, RXQUAL, ta, C/I) and
- a control device (CD) for controlling transmitter-end voice and channel decoding by means of at least one voice (SPCO) and channel codec (CHCO) for voice transmission via the radio interface, in which case the control device (CD) takes account of the stored characteristic value (RXLEV, RXQUAL, ta, C/I) at a later point in time in addition to a currently determined characteristic value (RXLEV, RXQUAL, ta, C/I) for controlling the voice and channel coding.

11. Base station system (BSS) according to Claim 10, in which the first radio station (TS1) determines the characteristic value (RXLEV, RXQUAL, ta, C/I) relating to the transmission response of the radio interface, and signals this to the base station (BS).

12. Base station system (BSS) according to Claim 10 or 11, with the control device (CD) for controlling the voice (SPCO) and channel codec (CHCO) for voice and channel coding in such a manner that the bit rate of the error protection in the channel codec (CHCO), and thus the gross bit rate at the output of the channel codec (CHCO) vary, with the net bit rate at the output of the voice codec (SPCO) remaining constant, or in that the net bit rate at the output of the voice codec (SPCO) and the bit rate of the error protection in the channel codec (CHCO) vary, with the gross bit rate at the output of the channel codec (CHCO) remaining constant.

13. Base station system (BSS) according to one of Claims 10 to 12, in which
the storage device (SD) and the control device (CD) are respectively provided in the base station (BS) or in the base station controller (BSC).

14. Base station system (BSS) according to one of Claims 10 to 13, having
the control device (CD) for determining a statistical mean value or a difference between the stored and the currently determined characteristic value (RXLEV, RXQUAL, ta, C/I).

15. Base station system (BSS) according to one of Claims 10 to 14, in which
the radio supply area of the base station (BS) is split into geographical subareas, and the location of the first radio station (TS1) is determined by means of a global localization system, directional antennas, range measurements or network planning.

16. Base station system (BSS) according to the preceding claim, in which
the control device (CD) weights the determined characteristic value (RXLEV, RXQUAL, ta, C/I) by a weighting coefficient which is defined for each geographical subarea and varies as a function of geographical characteristics and/or of time.

17. Base station system (BSS) according to Claim 15 or 16, having a three-dimensional memory matrix (MTX) which is provided in the storage device (SD) and in which the specific characteristic values (RXLEV, RXQUAL, ta, C/I) relating to the transmission response between the base station (BS) and the first radio station (TS1) as well as further radio stations (TS2...), which are likewise located in the radio supply area of the base station (BS) or in the same geographical subarea as the first radio station (TS1), are in each case stored on the basis of the geographical subarea and on the basis of time.

18. Base station system (BSS) according to the preceding claim, in which
the weighting coefficient which is in each case assigned to the geographical subareas is also stored in the three-dimensional matrix (MTX).

19. Base station system (BSS) according to one of Claims 10 to 18, having
a timer (T) which is provided in the control device (ST) for periodically stimulating the determination of the characteristic value (RXLEV, RXQUAL, ta, C/I) at predetermined time intervals.

## Revendications

1. Procédé destiné à la transmission de la parole par l'intermédiaire d'une interface radio dans un système numérique de communication par radio qui comporte
- au moins une station de base (B,S), qui est reliée à une commande de stations de base (BSC), et
- au moins une première station radio (TS1), qui se trouve dans une zone de couverture radio de la station de base (BS),
dans lequel
- au moins un signal est transmis, par l'intermédiaire de l'interface radio, entre la première station radio (TS1) et la station de base (BS) et,
- à partir du signal, au moins une valeur caractéristique (RXLEV, RXQUAL, ta, C/I), relative aux conditions de transmission de l'interface radio, est déterminée
**caractérisé par le fait que**
- la valeur caractéristique (RXLEV, RXQUAL, ta, C/I) est mémorisée dans au moins un dispositif de mémorisation (SD) et
- la valeur caractéristique mémorisée (RXLEV, RXQUAL, ta, C/I) est prise en considération, pour la transmission de la parole, à un instant ultérieur, en plus d'une valeur caractéristique déterminée en temps réel (RXLEV, RXQUAL, ta, C/I), pour une commande d'un codage de la parole et du canal du côté émission par au moins un codec vocal (SPCO) et un codec de canal (CHCO) destinés à la transmission de la parole.

2. Procédé selon la revendication 1 dans lequel,
en tant que valeur caractéristique (RXLEV, RXQUAL, ta, C/I), on détermine un niveau de réception, un taux d'erreurs sur les bits et/ou une valeur proportionnelle au temps de propagation (ta) du signal entre la première station radio (TS1) et la station de base (BS) et/ou un rapport signal/bruit.

3. Procédé selon l'une des revendications précédentes dans lequel
on détermine une moyenne statistique de la valeur caractéristique (RXLEV, RXQUAL, ta, C/I) mémorisée et de la valeur caractéristique (RXLEV, RXQUAL, ta, C/I) déterminée en temps réel ou la différence entre la valeur caractéristique (RXLEV, RXQUAL, ta, C / I) mémorisée et la valeur caractéristique (RXLEV, RXQUAL, ta, C/I) déterminée en temps réel et on la prend en considération pour la commande du codage de la parole et du canal côté émission.

4. Procédé selon l'une des revendications précédentes dans lequel
on divise la zone de couverture radio de la station de base (BS) en zones géographiques partielles et on détermine le lieu de séjour de la première station radio (TS1) grâce à un système global de localisation, des antennes directives, des mesures d'éloignement et/ou lors de la planification du réseau et on l'affecte à une zone géographique partielle de la zone de couverture radio de la station de base (BS).

5. Procédé selon l'une des revendications précédentes dans lequel
la valeur caractéristique définie (RXLEV, RXQUAL, ta, C/I) est pondérée par au moins un coefficient de pondération, le coefficient de pondération étant défini lors de la planification du réseau, en fonction de conditions géographiques, pour les différentes zones géographiques partielles et/ou variant en fonction du temps.

6. Procédé selon la revendication précédente dans lequel
plusieurs zones géographiques partielles, qui ont les mêmes conditions géographiques ou des conditions semblables, sont regroupées pour former une zone géographique partielle ayant un coefficient de pondération commun.

7. Procédé selon l'une des revendications précédentes dans lequel
la valeur caractéristique (RXLEV, RXQUAL, ta, C/I) est déterminée périodiquement à des intervalles de temps prédéterminés et/ou lors d'une migration de la première station radio (TS1) vers une autre zone géographique partielle.

8. Procédé selon l'une des revendications précédentes dans lequel
- d'autres valeurs caractéristiques (RXLEV, RXQUAL, ta, C / I), relatives au conditions de transmission entre la station de base (BS) et d'autres stations radio (TS2, ...), qui se trouvent également dans la zone de couverture radio de la station de base (BS) ou dans la même zone géographique partielle que la première station radio (TS1), sont mémorisées dans le dispositif de mémorisation (SD) et
- les autres valeurs caractéristiques (RXLEV, RXQUAL, ta, C / I) mémorisées sont, en outre, prises en considération, à un moment ultérieur, en commun avec d'autres valeurs caractéristiques (RXLEV, RXQUAL, ta, C/I) déterminées en temps réel, pour la commande du codage de la parole et du canal côté émission en vue de la transmission de la parole entre la station de base (BS) et la première station radio (TS1).

9. Procédé selon l'une des revendications précédentes dans lequel
la valeur caractéristique (RXLEV, RXQUAL, ta, C/I) est enregistrée, en fonction de la zone géographique partielle et en fonction du temps, dans une matrice de mémorisation (MTX) réalisée dans le dispositif de mémorisation (SD).

10. Système de stations de base (BSS) destiné à un système numérique de communication par radio, comportant au moins une station de base (BS), qui est reliée à une commande de stations de base (BSC), et comprenant
- au moins un dispositif émetteur/récepteur (TRX) destiné à émettre et recevoir, par l'intermédiaire d'une interface radio, des informations vocales entre la station de base (BS) et une première station radio (TS1), qui se trouve dans la zone de couverture radio de la station de base (BS),
- un dispositif d'évaluation des signaux (SED) destiné à déterminer au moins une valeur caractéristique (RXLEV, RXQUAL; ta, C/I), relative aux conditions de transmission de l'interface radio, à partir d'un signal transmis via l'interface radio,
- un dispositif de mémorisation (SD) destiné à mémoriser la valeur caractéristique (RXLEV, RXQUAL, ta, C/I) et
- un dispositif de commande (CD) destiné à contrôler un codage, côté émission, de la parole et du canal réalisé par un codec vocal (SPCO) et un codec de canal (CHCO) en vue de la transmission de la parole via l'interface radio, le dispositif de commande (CD) prenant, à un instant ultérieur, la valeur caractéristique mémorisée (RXLEV, RXQUAL, ta, C/I) en considération, en plus d'une valeur caractéristique déterminée en temps réel (RXLEV, RXQUAL, ta, C/I), pour la commande du codage de la parole et du canal.

11. Système de stations de base (BSS) selon la revendication 10 dans lequel
la première station radio (TS1) détermine la valeur caractéristique (RXLEV, RXQUAL, ta, C/I) relative aux conditions de transmission de l'interface aérienne et la signalise à la station de base (BS).

12. Système de stations de base (BSS) selon la revendication 10 ou 11 comportant le dispositif de commande (CD) destiné au contrôle du codec vocal (SPCO) et du codec de canal (CHCO) pour le codage de la parole et du canal de telle manière que le débit binaire de la protection contre les erreurs dans le codec du canal (CHCO) et, ainsi, le débit binaire brut à la sortie du codec du canal (CHCO) varient, le débit binaire net à la sortie du codec vocal (SPCO) restant constant, ou que le débit binaire net à la sortie du codec vocal (SPCO) et le débit binaire de la protection contre les erreurs dans le codec du canal (CHCO) varient, le débit binaire brut à la sortie du codec du canal (CHCO) restant constant.

13. Système de stations de base (BSS) selon l'une des revendications 10 à 12 dans lequel
le dispositif de mémorisation (SD) et le dispositif de commande (CD) sont réalisés l'un et l'autre dans la station de base (BS) ou dans la commande de stations de base (BSC).

14. Système de stations de base (BSS) selon l'une des revendications 10 à 13 comportant
le dispositif de commande (CD) destiné à déterminer une moyenne statistique ou une différence entre la valeur caractéristique (RXLEV, RXQUAL, ta, C/I) mémorisée et la valeur caractéristique (RXLEV, RXQUAL, ta, C/I) déterminée en temps réel.

15. Système de stations de base (BSS) selon l'une des revendications 10 à 14 dans lequel
la zone de couverture radio de la station de base (BS) est divisée en zones géographiques partielles et le lieu de séjour de la première station radio (TS1) est déterminé grâce à un système global de localisation, des antennes directives, des mesures d'éloignement ou une planification du réseau.

16. Système de stations de base (BSS) selon la revendication précédente dans lequel
le dispositif de commande (CD) pondère la valeur caractéristique déterminée (RXLEV, RXQUAL, ta, C/I) à l'aide d'un coefficient de pondération, défini pour chaque zone géographique partielle et qui varie en fonction des données géographiques et/ou en fonction du temps.

17. Système de stations de base (BSS) selon la revendication 15 ou 16 comportant une matrice de mémorisation à trois dimensions (MTX), réalisée dans le dispositif de mémorisation (SD) et dans laquelle les valeurs caractéristiques (RXLEV, RXQUAL, ta, C/I) déterminées, relatives aux conditions de transmission entre la station de base (BS) et la première station radio (TS1) et d'autres stations radio (TS2, ...), qui se trouvent également dans la zone de couverture radio de la station de base (BS) ou dans la même zone géographique partielle que la première station radio (TS1), sont stockées chacune en fonction de la zone géographique partielle et du temps.

18. Système de stations de base (BSS) selon la revendication précédente dans lequel
le coefficient de pondération, qui correspond, dans chaque cas, aux zones géographiques partielles, est mémorisé, en plus, dans la matrice de mémorisation à trois dimensions (MTX).

19. Système de stations de base (BSS) selon l'une des revendications 10 à 18 comportant
une horloge de minuterie (T), réalisée dans le dispositif de commande (ST) et destinée à solliciter périodiquement la détermination de la valeur caractéristique (RXLEV, RXQUAL, ta, C/I) à des intervalles de temps prédéterminés.
